# EUROPÄISCHE PATENTSCHRIFT

(11) **EP 1 825 232 B1**
(45) Veröffentlichungstag und Bekanntmachung des Hinweises auf die Patenterteilung: **03.02.2016**
(21) Anmeldenummer: 05802236.9
(22) Anmeldetag: 10.10.2005
(51) Int. Cl.: G01F 1/00, G01F 1/58, G01F 23/26, G01F 23/24

(54) **VORRICHTUNG ZUM BESTIMMEN DES FÜLLGRADES EINES FLUIDES**
DEVICE FOR DETERMINING THE LEVEL OF A FLUID
DISPOSITIF DE DETERMINATION DU NIVEAU DE REMPLISSAGE D'UN FLUIDE

(30) Priorität: 16.12.2004 DE 202004019442 U
(43) Veröffentlichungstag der Anmeldung: 29.08.2007
(73) Patentinhaber: BARTEC BENKE GmbH, 21465 Reinbek/Hamburg (DE)
(72) Erfinder: LERACH, Dieter, 8372 Zwiesel (DE); BÖHM, Alfred, 94234 Viechtach (DE)
(74) Vertreter: Kohl, Karl-Heinz
(86) Internationale Anmeldenummer: PCT/EP2005/010895
(87) Internationale Veröffentlichungsnummer: WO 2006/063631

(56) Entgegenhaltungen:
- EP-A- 0 626 567
- GB-A- 2 064 130
- US-A- 3 993 945
- US-A- 5 448 920
- US-A1- 2002 033 054

## Beschreibung

Die Erfindung betrifft eine Vorrichtung gemäß dem Oberbegriff des Anspruchs 1 zum Bestimmen des Gasanteiles eines strömenden Fluids in einer Messkammer durch Leitfähigkeitsmessung. Vorrichtungen zum Bestimmen des Gasanteiles eines Fluides in einer Messkammer können ausgebildet sein mit einer die Messkammer umgebenden Messkammerwandung, in der zwei Öffnungen zum Durchleiten des Fluides vorgesehen sind, und mindestens zwei flächigen Elektroden, die einander gegenüberliegend im Bereich der Messkammerwandung in der Messkammer angeordnet sind. Die Erfindung betrifft ferner ein Verfahren gemäß dem Oberbegriff des Anspruchs 12.

Eine Vorrichtung zum Bestimmen des Füllgrades eines Fluides ist beispielsweise aus der EP 0 617 789 B1 bekannt. Die aus dieser Druckschrift bekannte Vorrichtung weist ein fluiddurchströmtes Messrohr auf, in dem sich ein Elektrodenpaar befindet, dessen Einzelelektroden an gegenüberliegenden Messrohrwänden angeordnet sind. Dieses Elektrodenpaar dient zur Erfassung der Leitfähigkeit des durch das Messrohr strömenden Fluides, wobei die Leitfähigkeit ein Maß für den Füllgrad darstellt. Daneben ist ein weiteres Elektrodenpaar vorgesehen, das einen Bestandteil eines magnetisch induktiven Durchflussmessers bildet, der zur Erfassung der Fördergeschwindigkeit des Fluides im Messrohr dient.

Eine weitere gattungsgemäße Vorrichtung geht aus der EP 0 626 567 B1 hervor. Die EP 0 626 567 B1 lehrt eine Vorrichtung zur gleichzeitigen Bestimmung der Strömungsgeschwindigkeit und des Füllgrades in einer Messleitung. Die Vorrichtung weist ein gemeinsames Elektrodenpaar auf, das sowohl zur Bestimmung der Strömungsgeschwindigkeit des Fluides mit einem magnetisch induktiven Durchflussmesser als auch zur Bestimmung des Füllgrades mit einer Leitfähigkeitsmesseinrichtung dient. Die Messleitung der bekannten Vorrichtung besteht aus einem metallischen Rohr, in welchem ein Abschnitt mit rechteckigem Strömungsquerschnitt ausgebildet ist. Der rechteckige Abschnitt weist an seinen beiden Längsseiten jeweils eine flächige Einzelelektrode des Elektrodenpaars auf. Die Einzelelektroden sind dabei bezüglich des metallischen Rohres elektrisch isoliert ausgebildet.

Die US 5,448,920 betrifft eine Vorrichtung zum induktiven Messen der Eigenschaften eines Flüssigkeitsstromes in einem Kanal. Nach der US 5,448,920 kann auch vorgesehen sein, die Höhe der Flüssigkeitsströmung im Querschnitt des Kanals zu bestimmen.

Die US 2002/0033054 A1 offenbart einen elektromagnetischen Strömungssensor. Gegebenenfalls können nach der US 2002/0033054 A1 Zusatzelektroden zum Überwachen eines Fluidniveaus in einem Messrohr vorgesehen sein.

Ein weiterer elektromagnetischer Strömungsmesser ist aus der GB 2 064 130 A bekannt. Der Strömungsmesser weist eine kapazitive Messeinrichtung zur Bestimmung der Flüssigkeitshöhe in einem Kanal auf.

Eine Messzelle zum Messen der elektrischen Leitfähigkeit von Flüssigkeiten ist aus der US 3,993,945 bekannt.

**Aufgabe** der Erfindung ist es, eine Vorrichtung und ein Verfahren zum Bestimmen des Gasanteils in einer Messkammer anzugeben, die eine besonders hohe Messgenauigkeit erlauben. Diese Aufgabe wird erfindungsgemäß durch eine Vorrichtung mit den Merkmalen des kennzeichnenden Teils des Anspruchs 1 gelöst. Bevorzugte Ausführungsbeispiele sind in den abhängigen Ansprüchen angegeben. Ferner wird die Aufgabe durch ein Verfahren mit den Merkmalen des Anspruchs 12 gelöst.

Ein Grundgedanke der Erfindung kann darin gesehen werden, die in Fluidkontakt stehenden Wände der Messkammer in der Umgebung der beiden Elektroden zumindest abschnittsweise isolierend auszubilden. Hierdurch wird ein erweiterter Bereich der Isolation an der Messkammerwandung geschaffen. Der Erfindung liegt die Erkenntnis zugrunde, dass beim Vorliegen von elektrisch leitfähigen Messkammerwandungen die Gefahr besteht, dass elektrische Ströme zwischen den Elektroden nicht ausschließlich vom Fluid in der Messkammer getragen werden, sondern dass sich solche Ströme auch in der Messkammerwandung ausbilden. Beispielsweise kann elektrische Ladung von einer Elektrode in das Fluid, von dort in die leitfähige Messkammerwandung, von dort wieder in das Fluid und schließlich zur zweiten Elektroden fließen. Derartige Nebenschlüsse verringern jedoch die Präzision bei der Füllgradbestimmung, da der gemessene Leitwert nicht ausschließlich die Leitfähigkeit des Fluides sondern auch die Leitfähigkeit der elektrisch leitenden Messkammerwandung wiedergibt. Dies macht aufwendige Kompensationsverfahren bei der Auswertung der Elektrodenströme erforderlich.

Die erfindungsgemäße Vorrichtung kann auch als Bubble- oder Luftblasensensor bezeichnet werden, da sie zur Bestimmung eines Gasblasen- und/oder Gasanteils in einer Flüssigkeit dient. Diese Anteile können als Füllgrad bezeichnet werden. Bei dem Gas kann es sich dabei insbesondere um Luft handeln, bei dem Fluid um eine Flüssigkeit. Für eine Leitfähigkeitsmessung ist das Fluid geeigneterweise elektrisch leitfähig. Das Fluid kann beispielsweise Wasser aufweisen. Insbesondere kann es sich bei dem Fluid um Molkereiprodukte, beispielsweise um Milch handeln. Unter einer Isolierung wird erfindungsgemäß eine elektrische oder galvanische Isolierung verstanden.

Erfindungsgemäß ist an jeder der beiden Elektroden zumindest ein Isolationsbereich wie in Anspruch 1 definiert vorgesehen.

Nach der Erfindung ist jedoch vorgesehen, dass in der Messkammerwandung zwei Öffnungen zum Durchleiten des Fluides durch die Messkammer ausgebildet sind. Eine solche Anordnung ist zur Füllgradbestimmung eines strömenden Fluides besonders gut geeignet. Bevorzugt sind die beiden Öffnungen einander gegenüberliegend in der Messkammerwandung angeordnet. Es können grundsätzlich auch weitere Öffnungen vorgesehen sein.

Ein Aspekt der Erfindung, der für die Füllgradbestimmung strömender Fluide besonders geeignet ist, besteht darin, dass die Messkammerwandung in Fließrichtung des Fluides zumindest im Bereich der Elektroden,rohrartig ausgebildet ist. In diesem Fall kann die Messkammerwandung auch als Messrohr bezeichnet werden. Die Messkammerwandung kann beispielsweise als linear verlaufendes Rohr, aber auch als gebogenes Rohr, beispielsweise als U-Rohr, ausgebildet sein. Besonders vorteilhaft ist es, dass die Messkammerwandung zumindest im Bereich der Elektroden als lineares Rohr ausgebildet ist. Hierdurch kann im Bereich der Elektroden eine besonders verwirbelungsfreie Strömung und somit eine hohe Messgenauigkeit erzielt werden. Erfindungsgemäß ist der Innenquerschnitt der rohrartigen Messkammerwandung eckig und rechteckig, insbesondere quadratisch. Grundsätzlich kann der Innenquerschnitt von Messkammern auch rund, beispielsweise kreisrund oder ellipsenartig, sein.

Unter der Fließrichtung kann erfindungsgemäß die Bewegungsrichtung des strömenden Fluides in der Messkammer unter Annahme einer ideal laminaren Strömung verstanden werden. Bei rohrartigen Messkammerwandungen fällt die Fließrichtung insbesondere mit der Axialrichtung des Rohres zusammen.

Eine besonders hohe Messgenauigkeit kann erfindungsgemäß dadurch erzielt werden, dass die Isolationsbereiche in Fließrichtung des Fluides beiderseits der Elektroden angeordnet sind. Gemäß, dieser Ausführungsform ist die Messkammerwandung bevorzugt sowohl oberstromig als auch unterstromig der flächigen Elektroden elektrisch isolierend ausgebildet, wobei sowohl die oberstromigen Isolationsbereiche als auch die unterstromigen Isolationsbereiche an die jeweilige Elektrode anschließen. Die oberstromigen Isolationsbereiche und die unterstromigen Isolationsbereiche derselben und/oder der jeweils anderen Elektrode können auch ineinander übergehen.

Besonders bevorzugt ist es ferner, dass die Isolationsbereiche in Fließrichtung des Fluides zumindest doppelt so breit sind wie die jeweils hiervon umgebenen Elektroden. In diesem Zusammenhang kann unter der Breite eine Gesamtbreite der die jeweiligen Elektroden umgebenden Isolationsbereiche, beispielsweise eine Gesamtbreite des jeweils oberstromigen und unterstromigen Isolationsbereichs verstanden werden. Gemäß dieser Ausführungsform soll die isolierte Breite mindestens die doppelte Breite der jeweiligen Elektrode betragen. Die Breite der Isolationsbereiche kann die Breite der hierin befindlichen Elektroden einschließen.

Um die Präzision der Füllgradbestimmung weiter zu erhöhen, kann erfindungsgemäß vorgesehen sein, dass die Isolationsbereiche zumindest abschnittsweise im Querschnitt der Messkammer zwischen den Elektroden angeordnet sind. Die Isolationsbereiche der einzelnen Elektroden können dabei, müssen aber nicht notwendigerweise, unter Bildung eines gemeinsamen Isolationsbereiches ineinander übergehen. Unter der Anordnung der Isolationsbereiche zwischen den gegenüberliegenden Elektroden kann verstanden werden, dass sich die Isolationsbereiche ausgehend von den Elektroden quer zur Fließrichtung erstrecken. Bevorzugt ist vorgesehen, dass ein Bodenbereich und/oder Deckenbereich der Messkammerwandung elektrisch isoliert ist, also insbesondere mit zumindest einem Isolationsbereich ausgebildet ist. Die räumliche Anordnung von Boden- und Deckenbereich ist dabei insbesondere im Hinblick auf seitlich angeordnete Elektroden zu sehen. So können unter dem Boden- und Deckenbereich bei viereckigem Innenquerschnitt der Messkammer solche Messkammerwandelemente verstanden werden, die winklig zu den mit Elektroden versehenen Messkammerwandelementen verlaufen.

Eine weitere bevorzugte Ausführungsform besteht darin, dass die Elektroden mit der umgebenden Messkammerwandung flächig abschließen oder gegenüber der umgebenden Messkammerwandung zurückversetzt sind. Da erfindungsgemäß die die Elektroden umgebende Messkammerwandung zumindest bereichsweise isoliert ist, kann eine solche Elektrodenanordnung ohne Ausbildung signifikanter elektrischer Nebenschlüsse zwischen den Elektroden und der umgebenden Messkammerwandung erfolgen. Durch die flächig abschließende oder gegenüber der Messkammerwandung zurückversetzte Elektrodenanordnung kann im Bereich der Elektroden eine besonders laminare Strömung und somit eine besonders gute Messgenauigkeit erreicht werden. Die Elektroden können aber auch an der umgebenden Messkammerwandung vorstehen.

Es ist vorgesehen, dass die Messkammer im Bereich der Elektroden einen rechteckigen, insbesondere quadratischen Innenquerschnitt aufweist. Hierdurch können besonders einfach zu interpretierende Messwerte bei einem besonders einfachen Vorrichtungsaufbau erhalten werden.

Ferner ist es erfindungsgemäß, dass die Elektroden zumindest annähernd dieselbe Höhe aufweisen wie die Messkammer. Die Höhe kann dabei bevorzugt senkrecht zur Fließrichtung des Fluides gemessen werden. Die Höhe bezieht sich insbesondere auf die Messkammerwandelemente, an denen die Elektroden angeordnet sind.

Eine konstruktiv besonders einfache Vorrichtung ist dadurch gegeben, dass zwei, insbesondere identische, Elektroden an gegenüberliegenden Stellen der Messkammer vorgesehen sind. Insbesondere bei einem rechteckigen oder quadratischen Messkammerinnenquerschnitt stehen sich die Elektroden geeigneterweise diametral gegenüber.

Für eine besonders hohe Messgenauigkeit bei einfach zu interpretierenden Messwerten kann vorgesehen sein, dass Kontaktoberflächen der gegenüberliegenden Elektroden zum Inneren der Messkammer zumindest annähernd gleich groß sind. Unter den Kontaktoberflächen sind dabei insbesondere die für einen Fluidkontakt in der Messkammer vorgesehenen Oberflächen der Elektroden zu verstehen.

Für besonders einfach zu interpretierende Messwerte ist es darüber hinaus vorteilhaft, dass die Kontaktoberflächen der gegenüberliegenden Elektroden und/oder die Messkammerwandung im Bereich der Elektroden zumindest annähernd spiegelsymmetrisch ausgebildet sind. Eine Spiegelebene verläuft dabei vorzugsweise in Fließrichtung.

Sofern erfindungsgemäß im Bereich der Messkammer neben den genannten Elektroden weitere Elektroden, beispielsweise Hilfselektroden, vorgesehen sind, kann die Form, Ausgestaltung und Anordnung dieser weiteren Elektroden bezüglich den beiden gegenüberliegenden Elektroden grundsätzlich beliebig gewählt werden.

Wird an einem strömenden Fluid gemessen, so sind die Elektroden geeigneterweise so gestaltet, dass zu jedem Zeitpunkt ein repräsentativer Querschnitt einer Fluidleitung erfasst wird. Dazu sind rechteckige Elektroden besonders geeignet. Besonders bevorzugt ist es ferner, dass die gegenüberliegenden Elektroden zumindest annähernd rechteckige Grundflächen aufweisen. Unter den Grundflächen der Elektroden können dabei insbesondere parallel zur jeweils umgebenden Messkammerwandung verlaufende Schnittflächen der Elektroden verstanden werden.

Nach der Erfindung kann weiterhin vorgesehen sein, dass die gegenüberliegenden Elektroden schräg zur Fließrichtung verlaufen und insbesondere mit zumindest annähernd parallelförmigen Grundflächen ausgebildet sind. Besonders dann, wenn schräg gestellte Elektroden verwendet werden, kann es vorteilhaft sein, dass sich alle Luftblasen die gleiche zeitliche Wegstrecke über den bzw. zwischen den Elektroden bewegen und sich im Bereich der laminaren Strömung befinden. Bevorzugt sind die Elektroden so ausgebildet, dass ihre Breite über ihrer gesamten Höhe zumindest annähernd konstant ist. Insbesondere da die Strömungsgeschwindigkeit in der Messkammermitte aber häufig größer als an den Messkammerwandungen ist, kann es auch vorteilhaft sein, die Elektrodenbreite über der Elektrodenhöhe zu variieren.

Sofern schräg gestellte Elektroden zum Einsatz kommen, ist es bevorzugt, dass die zweite, gegenüberliegende Elektrode die gleiche Schrägstellung aufweist wie die erste Elektrode. Hierbei kann sich in räumlicher Darstellung zwischen den Elektroden ein Körper mit konstanter Seitenlänge ergeben, beispielsweise ein Würfel oder ein Prisma. Zur Bemaßung der Elektroden kann insbesondere der Satz von Cavalieri Anwendung finden.

Gemäß einer weiteren bevorzugten Ausführungsform der Erfindung kann vorgesehen sein, dass die gegenüberliegenden Elektroden in Fließrichtung des Fluides gegeneinander versetzt angeordnet sind.

Besonders vorteilhaft ist es ferner, dass die Isolationsbereiche der Messkammerwandung von Leitungsbereichen umgeben sind, in denen die Messkammerwandung elektrisch leitfähig, insbesondere metallisch, ausgeführt ist, wobei die zumindest eine Öffnung bevorzugt in den Leitungsbereichen angeordnet ist. Durch die metallische Ausführung der Messkammerwandung im Bereich der Öffnung kann eine besonders robuste Vorrichtung erhalten werden. Durch die elektrisch leitfähige Ausführung der Messkammerwandung in den Leitungsbereichen kann daneben eine Abschirmung der Elektroden gegenüber elektromagnetischen Störungen erzielt werden.

Grundsätzlich ist es möglich, die Messkammerwandung in den Isolationsbereichen durchgängig isolierend auszubilden. Besonders bevorzugt ist es jedoch, dass die Messkammerwandung in den Isolationsbereichen eine Isolationsschicht aufweist. In diesem Fall kann die Messkammerwandung in den Isolationsbereichen unterhalb der Isolationsschicht auch elektrisch leitfähig, insbesondere metallisch ausgebildet sein. Bei der Anordnung einer Isolationsschicht auf einer ansonsten leitfähigen Schicht kann einerseits eine hinreichende Isolation der Wandung gegenüber den Elektroden und/oder dem Fluid und andererseits eine besonders wirksame Abschirmung der Messkammer gegenüber elektromagnetischen Störungen erreicht werden.

Erfindungsgemäß ist es vorteilhaft, dass eine Spannungsquelle, insbesondere eine Wechselspannungsquelle vorgesehen ist, die mit den Elektroden über Zuleitungen in Leitungsverbindung steht, und dass eine Stromerfassungseinrichtung zum Messen eines Stromes in zumindest einer der Zuleitungen vorgesehen ist. Erfindungsgemäß wird mittels der Vorrichtung eine Leitfähigkeitsmessung durchgeführt, wobei aus der Leitfähigkeit des Fluides auf den Füllgrad in der Messkammer rückgeschlossen werden kann. Es wäre grundsätzlich auch möglich, den Füllgrad mittels einer Kapazitätsmessung zu erfassen, wobei die Elektroden als Kondensatorplatten ausgebildet sein könnten und das Fluid, insbesondere die Flüssigkeit und das hierin enthaltene Gas, das Dielektrikum bilden würden. Wenn eine Kapazitätsmessung durchgeführt wird, können die Elektroden gegenüber dem Messkammerinneren bzw. dem Fluid auch elektrisch isoliert ausgebildet werden.

Eine besonders kompakte und leicht transportable Vorrichtung ist erfindungsgemäß dadurch gegeben, dass ein Gehäuse vorgesehen ist, in dem die Messkammerwandung angeordnet ist. Bevorzugt ist dabei die Spannungsquelle und/oder die Stromerfassungseinrichtung am, insbesondere im Gehäuse vorgesehen. Das Gehäuse kann beispielsweise als Rohr ausgebildet sein, in dem, insbesondere beabstandet, die Messkammerwandung angeordnet ist. Zur elektromagnetischen Abschirmung ist das Gehäuse bevorzugt elektrisch leitfähig, insbesondere metallisch ausgeführt.

Grundsätzlich ist es vorteilhaft, wenn eine Ansteuer- und/oder Auswerteelektronik im Gehäuse bzw. in dessen unmittelbarer Nähe angebracht ist.

Die Erfindung wird nachfolgend anhand bevorzugter Ausführungsbeispiele näher erläutert, die schematisch in den Zeichnungen dargestellt sind. In den Zeichnungen zeigen:
- Fig. 1: einen Längsschnitt von oben einer erfindungsgemäßen Vorrichtung gemäß einem ersten Ausführungsbeispiel;
- Fig. 2: einen Längsschnitt von der Seite der Vorrichtung aus Fig. 1;
- Fig. 3: einen Längsschnitt von oben einer erfindungsgemäßen Vorrichtung gemäß einem zweiten Ausführungsbeispiel;
- Fig. 4: einen Längsschnitt von der Seite der Vorrichtung aus Fig. 3;
- Fig. 5: einen Längsschnitt von oben einer erfindungsgemäßen Vorrichtung gemäß einem dritten Ausführungsbeispiel;
- Fig. 6: einen Längsschnitt von der Seite der erfindungsgemäßen Vorrichtung aus Fig. 5;
- Fig. 7: eine perspektivische Ansicht einer erfindungsgemäßen Vorrichtung gemäß einem viertem Ausführungsbeispiel;
- Fig. 8: eine Seitenansicht auf eine Stirnseite der Vorrichtung aus Fig. 7;
- Fig. 9: eine Draufsicht der Vorrichtung der Figuren 7 und 8 mit verdeckten Kanten und Umrissen;
- Fig. 10: eine Querschnittsansicht der Vorrichtung der Figuren 7 bis 9 auf Höhe des Leitungsdurchgangs; und
- Fig. 11: eine erfindungsgemäße Vorrichtung gemäß einem fünften Ausführungsbeispiel.

Gleichwirkende Elemente sind in allen Figuren durchgängig mit denselben Bezugszeichen bezeichnet.

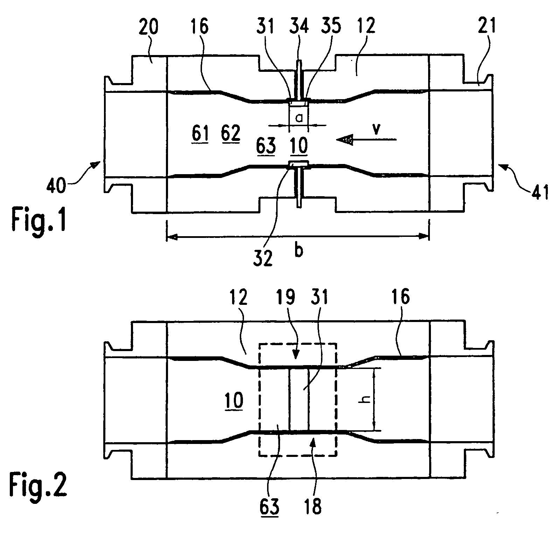

Fig. 1 und 2 zeigen eine erfindungsgemäße Vorrichtung zum Bestimmen des Füllgrades eines strömenden Fluides gemäß einer ersten Ausführungsform. Die Vorrichtung weist eine Messkammerwandung 12 auf, die eine Messkammer 10 im Inneren der Vorrichtung umgrenzt. Die Messkammer 10 ist länglich gestreckt ausgebildet. An gegenüberliegenden Stirnseiten der Messkammer 10 ist eine Öffnung 41 zum Einleiten des Fluides in die Messkammer 10 bzw. eine Öffnung 40 zum Ausleiten des Fluides aus der Messkammer 10 vorgesehen. Endseitig, im Bereich der Öffnungen 40, 41, ist an der Messkammerwandung 12 jeweils ein Anschlussflansch 20, 21 zum Einflanschen der erfindungsgemäßen Vorrichtung in eine Leitung vorgesehen. Die erfindungsgemäße Vorrichtung kann somit zur Füllgradbestimmung in einer Leitung dienen.

Wie in Fig. 1 beispielhaft an der linken Seite der Messkammer 10 gezeigt ist, weist diese Messkammer 10 Bereiche unterschiedlichen Querschnitts auf. Der Querschnitt wird dabei senkrecht zur ideallaminaren Fließrichtung v des Fluides in der Messkammer 10 betrachtet, die mit der Längsachse der Messkammer 10 zusammenfällt. An einem ersten, außenseitigen Messkammerbereich 61 mit konstantem Querschnitt schließt sich zum Messkammerinneren ein sich verjüngender Messkammerbereich 62 an, in dem der Messkammerquerschnitt zum Messkammerinneren hin abnimmt. Hieran wiederum schließt sich ein dritter Messkammerbereich 63 mit konstantem Querschnitt an. In diesem dritten Messkammerbereich 63 ist die Messkammer 10 mit rechteckigem, insbesondere quadratischem Querschnitt ausgebildet. Die Messkammer 10 ist spiegelsymmetrisch ausgebildet, wobei eine Symmetrieebene senkrecht zur Fließrichtung v des Fluides verläuft. Somit sind den Messkammerbereichen 61 bis 63 entsprechende Bereiche auch rechtsseitig in der Messkammer 10 vorgesehen. Zur Bildung des rechteckigen Messkammerquerschnittes im dritten Messkammerbereich 63 weist die Messkammerwandung 12 in diesem Bereich 63 vier senkrecht zueinander verlaufende Wandelemente auf.

An der Messkammerwandung 12 sind im dritten Messkammerbereich 63 zwei Elektroden 31, 32 einander senkrecht zur Fließrichtung v gegenüberliegend angeordnet. Zur Füllgradbestimmung wird zwischen diesen beiden Elektroden 31, 32 eine Spannung, vorzugsweise eine Wechselspannung, angelegt, die einen dem Leitwert der in der Messkammer 10 stehenden oder diese Kammer 10 durchfließenden Flüssigkeit entsprechenden Strom erzeugt. Dieser Strom wird zur Leitwertbestimmung erfasst.

Die Elektrode 31 ist im Längsschnitt von oben der Fig. 1 T-artig ausgebildet. Kopfseitig weist diese Elektrode 31 eine zum Messkammerinneren gerichtete Kontaktoberfläche 35 auf, an der die Elektrode 31 mit dem Fluid in der Messkammer 10 in Kontakt steht. In dem in Fig. 1 dargestellten Ausführungsbeispiel schließt die Elektrode 31 nicht flächig mit der umgebenden Messkammerwandung 12 ab, sondern ist gegenüber dieser stufenartig ins Messkammerinnere vorversetzt angeordnet. Die Kontaktoberfläche 35 ist somit absatzartig ausgebildet und weist eine parallel zur Fließrichtung verlaufende Längsfläche und senkrecht hierzu verlaufende Stirnflächen auf. Fußseitig ist an der Elektrode 31 eine Anschlussleitung 34 vorgesehen. Die Elektrode 32 ist der Elektrode 31 entsprechend aufgebaut und angeordnet.

Wie in Fig. 2 am Beispiel der Elektrode 31 gezeigt ist, erstrecken sich die Elektroden 31, 32 über die gesamte Höhe der Messkammer 10, d.h. die Höhe h der Elektroden 31, 32 entspricht der Höhe der Messkammer 10, zumindest im dritten Messkammerbereich 63. Die Elektroden 31, 32 erstrecken sich somit entlang der gesamten Höhe gegenüberliegender, parallel verlaufender Innenoberflächen der Messkammerwandung 12.

Die Elektroden 31, 32 sind gegenüber der Messkammerwandung 12, die insbesondere als Rohr ausgebildet sein kann, galvanisch isoliert. Hierzu ist auf der Innenoberfläche der Messkammerwandung 12 eine Isolationsschicht 16, beispielsweise eine Kunststoffschicht vorgesehen. Diese Isolationsschicht 16 ist zum einen im Bereich der Anschlussleitungen 34 der Elektroden 31, 32 sowie zwischen deren kopfseitigen Enden und der Messkammerwandung 12, d.h. unter den Elektroden 31, 32 angeordnet. Daneben ist die Isolationsschicht 16 auch in Fließrichtung v des Fluides gesehen vor und hinter den Elektroden 31, 32 vorgesehen, wodurch an der Messkammerwandung 12 flächige Isolationsbereiche gebildet werden, welche die beiden Elektroden 31, 32 umgeben. Diese Isolationsbereiche weisen eine Breite b auf, die bevorzugt mindestens das Doppelte, insbesondere bis zum fünfzehnfachen einer Elektrodenbreite a betragen kann. Vorteilhafterweise erstrecken sich die Isolationsbereiche 16 zwischen den Flanschen 20, 21 entlang der gesamten Messkammerwandung 12.

Wie Fig. 2 zu entnehmen ist, ist die Isolationsschicht 16 auch im Bodenbereich 18 und im Deckenbereich 19 der Messkammer 10 vorgesehen, also an den Innenoberflächen der Messkammerwandung 12, die von den Elektroden 31, 32 beabstandet sind und senkrecht zu diesen Elektroden 31, 32 verlaufen.

Sofern eine Isolationsschicht 16 vorgesehen ist, kann die Messkammerwandung 12 ansonsten aus elektrisch leitfähigem Material, beispielsweise aus Metall bestehen. Es kann aber auch vorgesehen sein, die Messkammerwandung 12 durchgehend elektrisch isolierend auszubilden, wodurch dann in den Isolationsbereichen eine Isolationsschicht 16 entfallen kann.

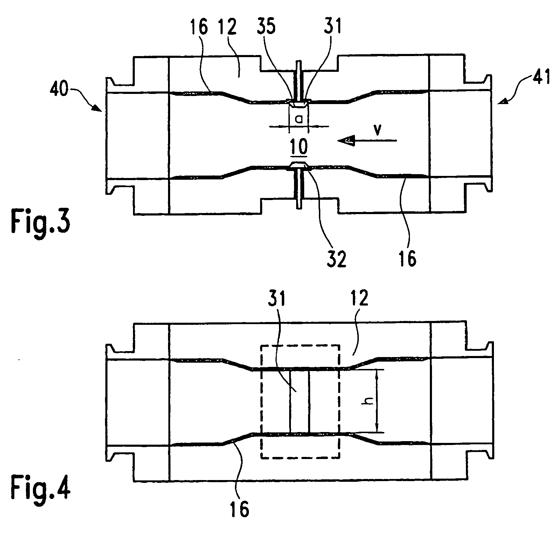

Eine weitere Ausführungsform einer erfindungsgemäßen Vorrichtung ist in den Fig. 3 und 4 dargestellt. Die in diesen Figuren dargestellte Ausführungsform unterscheidet sich von der Ausführungsform der Fig. 1 und 2 lediglich dadurch, dass die Elektroden 31, 32 hier zur Fließrichtung v angeschrägte Kontaktoberflächen 35 aufweisen. Entsprechend dem Längsschnitt der Fig. 3 weisen die Kontaktoberflächen 35 zwei Stirnflächen auf, die in einem Winkel von etwa 45° zur Fließrichtung v verlaufen, wobei zwischen diesen Stirnflächen eine weiterhin parallel zur Fließrichtung v verlaufende Längsfläche angeordnet ist.

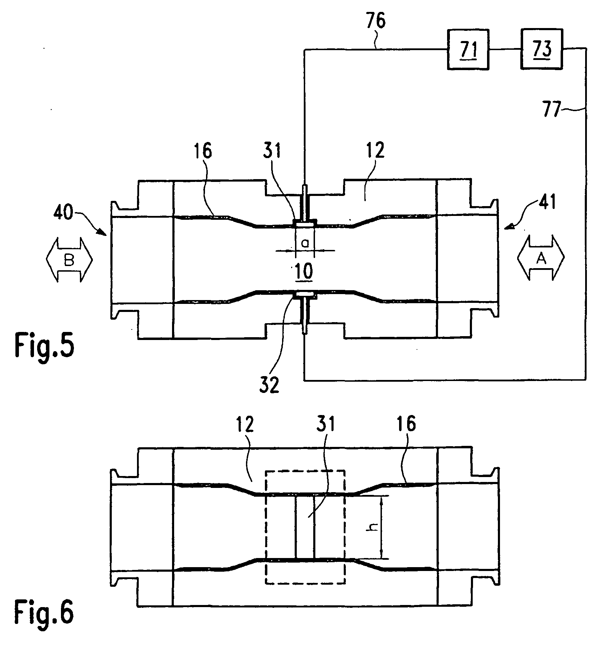

Das in den Fig. 5 und 6 dargestellte Ausführungsbeispiel unterscheidet sich von dem Ausführungsbeispiel der Fig. 1 und dadurch, dass die Elektroden hier nicht aus der Messkammerwandung 12 vorstehen, sondern bündig in der Messkammerwandung 12 versenkt sind. Die Kontaktoberflächen 35 der Elektroden 31, 32 sind dabei eben ausgebildet.

Daneben ist in Fig. 5 auch noch schematisch eine Spannungsquelle 71 gezeigt, die über Zuleitungen 76, 77 mit den Elektroden 31 bzw. 32 verbunden ist. In der Zuleitung 77 ist dabei eine Stromerfassungseinrichtung 73 zum Messen des Stromes durch die Elektrode 32 vorgesehen. Entsprechend verschaltete Spannungsquellen 71 und Stromerfassungseinrichtungen 73 können auch bei den anderen gezeigten Ausführungsbeispielen Verwendung finden.

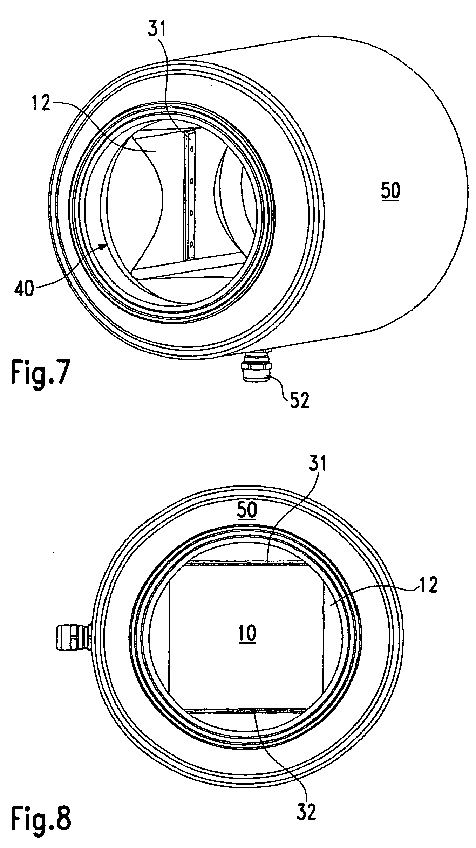

Ein viertes Ausführungsbeispiel einer erfindungsgemäßen Vorrichtung ist in den Figuren 7 bis 10 dargestellt. Die in diesen Figuren dargestellte Ausführungsform weist ein rohrartiges Gehäuse 50 auf, in welchem die Messkammerwandung 12 mit der Messkammer 10 angeordnet ist. Die Messkammerwandung 12 kann dabei insbesondere materialverschieden bezüglich dem Gehäuse 50 und/oder von diesem beabstandet sein. In dem Gehäuse 50 können die Ansteuer- und Auswerteelektronik für die Elektroden 31, 32 vorgesehen sein. Zum elektrischen Anschluss dieser Elektronik und/oder der beiden Elektroden 31, 32 ist mittig am Gehäuse 50 ein Leitungsdurchgang 52 vorgesehen.

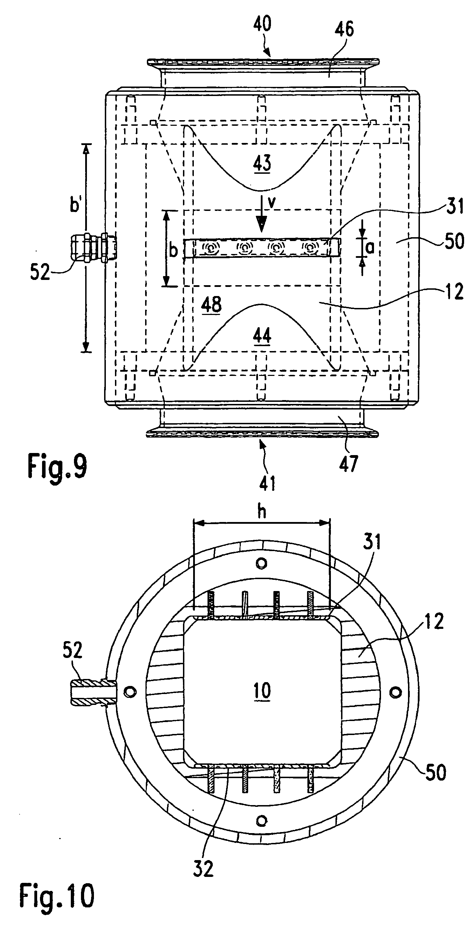

Wie insbesondere in Fig. 9 erkennbar ist, weist die Messkammerwandung 12 der vierten Ausführungsform zwei konische Bereiche 43, 44 auf, an denen endseitig Anschlussflansche 46, 47 vorgesehen sind. In diesen Anschlussflanschen 46, 47 sind die Öffnungen 40, 41 der Messkammerwandung 12 ausgebildet, wobei die beiden Öffnungen 40, 41 etwa kreisförmigen Querschnitt aufweisen. Von den Öffnungen 40, 41 ausgehend verjüngt sich der Querschnitt der Messkammer 10 in den konischen Bereichen 43, 44 kontinuierlich und geht in einem mittigen Bereich 48 der Messkammer 10 in einen rechteckigen Querschnitt über. In diesem mittigen Bereich 48 sind die beiden Elektroden 31, 32 angeordnet.

Wie Fig. 9 ferner zu entnehmen ist, weisen die Isolationsbereiche der vierten Ausführungsform eine Gesamtbreite auf, die, einschließlich der darin angeordneten Elektroden 31, 32, etwa die vierfache Breite b der Elektrodenbreite a beträgt. Die Isolationsbereiche können aber auch mit erheblich größerer Breite b' ausgeführt werden.

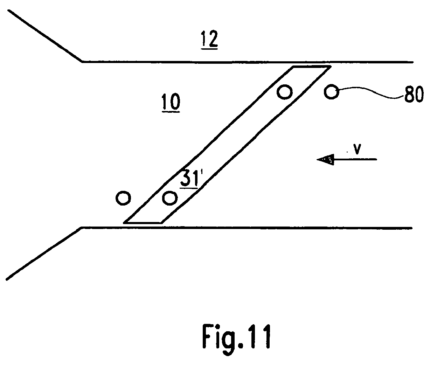

Ein weiteres Ausführungsbeispiel einer erfindungsgemäßen Vorrichtung ist in Fig. 11 gezeigt. Gemäß dem Ausführungsbeispiel der Fig. 11 sind anstelle rechteckig ausgeführter Elektroden parallelogrammartige, schräg zur Fließrichtung v verlaufende Elektroden 31' vorgesehen. Durch die parallelogrammartige Ausführung kann gewährleistet werden, dass die Elektroden 31' über dem gesamten Querschnitt der Messkammer 10 dieselbe Breite aufweisen. Luftblasen 80, die sich mit dem Fluid in Fließrichtung v durch die Messkammer 10 bewegen, erfahren somit unabhängig von ihrer Position im Querschnitt der Messkammer 10 stets dieselbe Messstrecke.

## Patentansprüche

1. Vorrichtung zum Bestimmen des Gasanteils in einer strömenden Flüssigkeit in einer Messkammer (10), welche von einer zumindest bereichsweise als Messrohr ausgebildeten Messkammerwandung (12) umgeben ist, durch Messung des Leitwertes der Flüssigkeit, mit
- der die Messkammer (10) umgebenden Messkammerwandung (12), wobei in der Messkammerwandung (12) zwei Öffnungen (40, 41) zum Durchleiten der Flüssigkeit durch die Messkammer (10) ausgebildet sind, und
- mindestens zwei flächigen Elektroden (31, 32) für einen Kontakt mit der Flüssigkeit in der Messkammer (10), die einander gegenüberliegend im Bereich der Messkammerwandung (12) in der Messkammer (10) angeordnet sind, wobei
- die Messkammerwandung (12) in Fließrichtung (v) der Flüssigkeit zumindest im Bereich der Elektroden (31, 32) rohrartig ausgebildet ist und die Elektroden (31, 32) zumindest annähernd dieselbe Höhe (h) aufweisen wie die Messkammer (10),
**dadurch gekennzeichnet,**
- **dass** die Messkammerwandung (10) in Isolationsbereichen, welche an die beiden Elektroden (31, 32) anschließen und diese flächig umgeben, elektrisch isolierend ausgebildet ist, wobei die Isolationsbereiche in Fließrichtung (v) der Flüssigkeit beiderseits der Elektroden (31, 32) angeordnet sind und in Fließrichtung (v) der Flüssigkeit zumindest doppelt so breit sind wie die jeweils hiervon umgebenen Elektroden (31, 32), und
- **dass** die Isolationsbereiche zumindest abschnittsweise im Querschnitt der Messkammer (10) zwischen den Elektroden (31, 32) angeordnet sind, so dass die Isolationsbereiche der einzelnen Elektroden (31, 32) unter Bildung eines gemeinsamen Isolationsbereiches ineinander übergehen.

2. Vorrichtung nach Anspruch 1,
**dadurch gekennzeichnet,**
**dass** die Elektroden (31, 32) mit der umgebenden Messkammerwandung (12) flächig abschließen oder gegenüber der umgebenden Messkammerwandung (12) zurückversetzt sind.

3. Vorrichtung nach einem der Ansprüche 1 oder 2,
**dadurch gekennzeichnet,**
**dass** zwei, insbesondere identische, Elektroden (31, 32) an gegenüberliegenden Stellen der Messkammer (10) vorgesehen sind.

4. Vorrichtung nach einem der Ansprüche 1 bis 3,
**dadurch gekennzeichnet,**
**dass** Kontaktoberflächen (35) der gegenüberliegenden Elektroden (31, 32) zum Inneren der Messkammer (10) zumindest annähernd gleich groß sind.

5. Vorrichtung nach einem der Ansprüche 1 bis 4,
**dadurch gekennzeichnet,**
**dass** die Kontaktoberflächen (35) der gegenüberliegenden Elektroden (31, 32) zumindest annähernd spiegelsymmetrisch ausgebildet sind.

6. Vorrichtung nach einem der Ansprüche 1 bis 5,
**dadurch gekennzeichnet,**
**dass** die gegenüberliegenden Elektroden (31, 32) zumindest annähernd rechteckige Grundflächen aufweisen.

7. Vorrichtung nach einem der Ansprüche 1 bis 6,
**dadurch gekennzeichnet,**
**dass** die gegenüberliegenden Elektroden (31, 32) schräg zur Fließrichtung (v) verlaufen und insbesondere mit zumindest annähernd parallelogrammförmigen Grundflächen ausgebildet sind.

8. Vorrichtung nach einem der Ansprüche 1 bis 7,
**dadurch gekennzeichnet,**
**dass** die Isolationsbereiche der Messkammerwandung (12) von Leitungsbereichen umgeben sind, in denen die Messkammerwandung (12) elektrisch leitfähig, insbesondere metallisch, ausgeführt ist, wobei die zumindest eine Öffnung (40, 41) bevorzugt in den Leitungsbereichen angeordnet ist.

9. Vorrichtung nach einem der Ansprüche 1 bis 8,
**dadurch gekennzeichnet,**
**dass** die Messkammerwandung (12) in den Isolationsbereichen eine Isolationsschicht (16) aufweist.

10. Vorrichtung nach einem der Ansprüche 1 bis 9,
**dadurch gekennzeichnet,**
**dass** eine Spannungsquelle (71), insbesondere eine Wechselspannungsquelle vorgesehen ist, die mit den Elektroden (31, 32) über Zuleitungen (76, 77) in Leitungsverbindung steht, und
**dass** eine Stromerfassungseinrichtung (73) zum Messen eines Stromes in zumindest einer der Zuleitungen (76, 77) vorgesehen ist.

11. Vorrichtung nach Anspruch 10,
**dadurch gekennzeichnet,**
- **dass** ein Gehäuse (50) vorgesehen ist, in dem die Messkammerwandung (12) angeordnet ist, und
- **dass** die Spannungsquelle (71) und/oder die Stromerfassungseinrichtung (73) am, insbesondere im Gehäuse (50) vorgesehen ist.

12. Verfahren zum Bestimmen des Gasanteils in einer Flüssigkeit in einer Messkammer (10), bei dem
- durch zumindest eine Öffnung (40, 41), die in einer die Messkammer (10) umgebenden Messkammerwandung (12) vorgesehen ist, Flüssigkeit in die Messkammer (10) eingeleitet wird,
- zwei flächige Elektroden (31, 32), die in Kontakt mit der Flüssigkeit in der Messkammer (10) stehen und die einander gegenüberliegend im Bereich der Messkammerwandung (12) in der Messkammer (10) angeordnet sind, über Zuleitungen (76, 77) mit einer Spannungsquelle (71) in Leitungsverbindung gebracht werden, und
- mittels einer Stromerfassungseinrichtung (73) ein Strom in zumindest einer der Zuleitungen (76, 77) gemessen wird,
**dadurch gekennzeichnet,**
- **dass** eine Vorrichtung nach einem der vorstehenden Ansprüche verwendet wird,
- wobei die Messkammerwandung (10) in Isolationsbereichen, welche an die beiden Elektroden (31, 32) anschließen und diese flächig umgeben, elektrisch isolierend ausgebildet ist.

## Claims

1. A device for determining the gas proportion in a flowing liquid in a measuring chamber (10), which is surrounded by a measuring chamber wall (12) constituted at least in sections as a measuring tube, by measuring the conductivity of the liquid, comprising
- the measuring chamber wall (12) surrounding the measuring chamber (10), wherein two openings (40, 41) for conveying the liquid through the measuring chamber (10) are constituted in the measuring chamber wall (12), and
- at least two planar electrodes (31, 32) for a contact with the liquid in the measuring chamber (10), said electrodes being disposed in the measuring chamber (10) lying opposite one another in the region of the measuring chamber wall (12), wherein
- the measuring chamber wall (12) is constituted tubular in the flow direction (v) of the liquid at least in the region of the electrodes (31, 32) and the electrodes (31, 32) have at least approximately the same height (h) as the measuring chamber (10),
**characterised in that**
- the measuring chamber wall (12) is constituted electrically insulating in insulation regions which adjoin the two electrodes (31, 32) and surrounded the latter in a planar manner, wherein the insulation regions are disposed on both sides of the electrodes (31, 32) in the flow direction (v) of the liquid and, in the flow direction (v) of the liquid, are at least twice as wide as the electrodes (31, 32) in each case surrounded by the latter, and
- that the insulation regions are disposed between the electrodes (31, 32) at least in sections in the cross-section of the measuring chamber (10), so that the insulation regions of the individual electrodes (31, 32) verge into one another thereby forming a common insulation region.

2. The device according to claim 1,
**characterised in that**
the electrodes (31, 32) terminate in a planar manner with the surrounding measuring chamber wall (12) or are set back with respect to the surrounding measuring chamber wall (12).

3. The device according to any one of claims 1 or 2,
**characterised in that**
two, in particular identical, electrodes (31, 32) are provided at opposite points of the measuring chamber (10).

4. The device according to any one of claims 1 to 3,
**characterised in that**
contact faces (35) of the mutually opposite electrodes (31, 32) with the interior of the measuring chamber (10) are at least approximately of the same size.

5. The device according to any one of claims 1 to 4,
**characterised in that**
the contact faces (35) of the mutually opposite electrodes (31, 32) are constituted at least approximately mirror-symmetrical.

6. The device according to any one of claims 1 to 5,
**characterised in that**
the mutually opposite electrodes (31, 32) have at least approximately rectangular base areas.

7. The device according to any one of claims 1 to 6,
**characterised in that**
the mutually opposite electrodes (31, 32) run obliquely with respect to the flow direction (v) and, in particular, are constituted with at least approximately parallelogram-shaped base areas.

8. The device according to any one of claims 1 to 7,
**characterised in that**
the insulation regions of the measuring chamber wall (12) are surrounded by conduction regions, in which the measuring chamber wall (12) is constituted electrically conductive, in particular metallic, wherein the at least one opening (40, 41) is preferably disposed in the conduction regions.

9. The device according to any one of claims 1 to 8,
**characterised in that**
the measuring chamber wall (12) comprises an insulating layer (16) in the insulation regions.

10. The device according to any one of claims 1 to 9,
**characterised in that**
a voltage source (71), in particular an alternating voltage source, is provided, which is in a conducting connection via supply lines (76, 77) with the electrodes (31, 32), and
that a current detection device (73) is provided for measuring a current in at least one of the supply lines (76, 77).

11. The device according to claim 10,
**characterised in that**
- a housing (50) is provided, in which the measuring chamber wall (12) is disposed, and
- that the voltage source (71) and/or the current detection device (73) is provided on, particularly in, the housing (50).

12. A method for determining the gas proportion in a liquid in a measuring chamber (10), wherein
- liquid is introduced into the measuring chamber (10) through at least one opening (40, 41), which is provided in a measuring chamber wall (12) surrounding the measuring chamber (10),
- two planar electrodes (31, 32), which are in contact with the liquid in the measuring chamber (10) and which are disposed in the measuring chamber (10) lying opposite one another in the region of the measuring chamber wall (12), are brought into a conducting connection via supply lines (76, 77) with a voltage source (71), and
- a current in at least one on the supply lines (76, 77) is measured by means of a current detection device (73),
**characterised in that**
- a device according to any one of the preceding claims is used,
- wherein the measuring chamber wall (10) is constituted electrically insulating in insulation regions which adjoin the two electrodes (31, 32) and surrounded the latter in a planar manner.

## Revendications

1. Dispositif destiné à la détermination de la teneur en gaz dans un liquide en écoulement dans une chambre de mesure (10) qui est entourée d'une paroi de chambre de mesure (12) formée en tant que tube de mesure au moins par tronçons, par mesure de la conductance du liquide, comprenant
- la paroi de chambre de mesure (12) entourant la chambre de mesure (10), sachant que deux ouvertures (40, 41) sont formées dans la paroi de chambre de mesure (12) pour faire passer le liquide à travers la chambre de mesure (10), et
- au moins deux électrodes planes (31, 32) pour un contact avec le liquide dans la chambre de mesure (10), qui sont disposées l'une en face de l'autre au niveau de la paroi de chambre de mesure (12) dans la chambre de mesure (10), sachant que
- la paroi de chambre de mesure (12) est en forme de tube dans le sens d'écoulement (v) du liquide au moins au niveau des électrodes (31, 32) et les électrodes (31, 32) présentent approximativement la même hauteur (h) au moins que la chambre de mesure (10),
**caractérisé en ce que**
- la paroi de chambre de mesure (12) est conçue avec une isolation électrique dans des zones d'isolation qui se raccordent aux deux électrodes (31, 32) et les entourent sur toute leur surface, sachant que les zones d'isolation sont disposées dans le sens d'écoulement (v) du liquide des deux côtés des électrodes (31, 32) et ont une largeur dans le sens d'écoulement (v) du liquide qui est au moins le double des électrodes (31, 32) entourées respectivement par celles-ci, et
- que les zones d'isolation sont disposées au moins par tronçons dans la section transversale de la chambre de mesure (10) entre les électrodes (31, 32), de telle sorte que les zones d'isolation des électrodes individuelles (31, 32) passent l'une dans l'autre en formant une zone d'isolation commune.

2. Dispositif selon la revendication 1,
**caractérisé en ce que**
les électrodes (31, 32) se raccordent sur toute leur surface avec la paroi de chambre de mesure (12) d'enceinte ou sont ramenées en arrière par rapport à la paroi de chambre de mesure (12) d'enceinte.

3. Dispositif selon la revendication 1 ou 2,
**caractérisé en ce que**
deux électrodes (31, 32), en particulier identiques, sont prévues en des points opposés de la chambre de mesure (10).

4. Dispositif de mesure selon l'une des revendications 1 à 3,
**caractérisé en ce que**
des surfaces de contact (35) des électrodes (31, 32) l'une en face de l'autre sont au moins approximativement de la même dimension en direction de l'intérieur de la chambre de mesure (10).

5. Dispositif de mesure selon l'une des revendications 1 à 4,
**caractérisé en ce que**
les surfaces de contact (35) des électrodes (31, 32) l'une en face de l'autre sont formées au moins approximativement en symétrie de miroir.

6. Dispositif de mesure selon l'une des revendications 1 à 5,
**caractérisé en ce que**
les électrodes (31, 32) l'une en face de l'autre présentent des bases au moins approximativement rectangulaires.

7. Dispositif de mesure selon l'une des revendications 1 à 6,
**caractérisé en ce que**
les électrodes (31, 32) l'une en face de l'autre sont en biais par rapport au sens d'écoulement (v) et sont formées en particulier avec des bases au moins approximativement en forme de parallélogramme.

8. Dispositif de mesure selon l'une des revendications 1 à 7,
**caractérisé en ce que**
les zones d'isolation de la paroi de chambre de mesure (12) sont entourées par des zones conductrices dans lesquelles la paroi de chambre de mesure (12) est conçue électriquement conductrice, en particulier métallique, sachant que l'au moins une ouverture (40, 41) est disposée de préférence dans les zones conductrices.

9. Dispositif de mesure selon l'une des revendications 1 à 8,
**caractérisé en ce que**
la paroi de chambre de mesure (12) présente une couche d'isolation (16) dans les zones d'isolation.

10. Dispositif de mesure selon l'une des revendications 1 à 9,
**caractérisé en ce**
**qu'**une source de tension (71), en particulier une source de courant alternatif est prévue qui est en liaison conductrice avec les électrodes (31, 32) par le biais de lignes d'alimentation (76, 77), et
**qu'**un dispositif de détection du courant (73) pour mesurer un courant dans au moins une des lignes d'alimentation (76, 77) est prévu.

11. Dispositif selon la revendication 10, **caractérisé en ce**
- **qu'**un boîtier (50) est prévu, dans lequel la paroi de chambre de mesure (12) est disposée, et
- **que** la source de tension (71) et/ou le dispositif de détection du courant (73) est/sont prévu(s) sur, en particulier dans le boîtier (50).

12. Procédé de détermination de la teneur en gaz dans un liquide dans une chambre de mesure (10), dans lequel
- du liquide est introduit dans la chambre de mesure (10) par au moins une ouverture (40, 41) qui est prévue dans une paroi de chambre de mesure (12) entourant la chambre de mesure (10),
- deux électrodes plates (31, 32) qui sont en contact avec le liquide dans la chambre de mesure (10) et qui sont disposées l'une en face de l'autre au niveau de la paroi de chambre de mesure (12) dans la chambre de mesure (10), sont mises en liaison de contact avec une source de tension (71) par des lignes d'alimentation (76, 77), et
- un courant est mesuré dans au moins une des lignes d'alimentation (76, 77) au moyen d'un dispositif de détection du courant (73),
**caractérisé en ce**
- **qu'**un dispositif selon l'une des revendications précédentes est employé,
- sachant que la paroi de chambre de mesure (10) est conçue avec une isolation électrique dans des zones d'isolation qui se raccordent aux deux électrodes (31, 32) et les entourent sur toute leur surface.
